# Europäisches Patentamt

# European Patent Office

# Office européen des brevets

(19)

(11) Veröffentlichungsnummer: **0 155 368**
**B1**

(12) ## EUROPÄISCHE PATENTSCHRIFT

(45) Veröffentlichungstag der Patentschrift:
**29.04.87**

(21) Anmeldenummer: **84114571.7**

(22) Anmeldetag: **30.11.84**

(51) Int. Cl.⁴: **C 04 B 7/43,** G 01 L 5/00,
G 01 L 3/00

(54) **Messanordnung zur Ermittlung und Auswertung des Drehmomentes der Antriebsmaschine eines Drehofens.**

(30) Priorität: **13.03.84 DE 3409176**

(43) Veröffentlichungstag der Anmeldung:
**25.09.85 Patentblatt 85/39**

(45) Bekanntmachung des Hinweises auf die Patenterteilung:
**29.04.87 Patentblatt 87/18**

(84) Benannte Vertragsstaaten:
**AT BE CH DE FR GB IT LI**

(56) Entgegenhaltungen:
**DE-A-2 507 138**
**GB-A-2 075 196**

**GEC-AEI JOURNAL, Band 35, Nr. 2, 1968, Seiten 57-66, Wembley, Middlesex, GB; J.D. HIGHAM: "Computer control of a cement kiln, using CONRAD standard software"**
**PATENTS ABSTRACTS OF JAPAN, Band 7, Nr. 266 (P-239) 1411 , 26. November 1983**

(73) Patentinhaber: **Siemens Aktiengesellschaft Berlin und München, Wittelsbacherplatz 2, D-8000 München 2 (DE)**

(72) Erfinder: **Wackerle, Johann, Poxdorfer Strasse 4a, D-8550 Forchheim (DE)**

EP 0 155 368 B1

## Beschreibung

Die Erfindung betrifft eine Meßanordnung zur Ermittlung und Auswertung des Drehmomentes der Antriebsmaschine eines Drehofens.

Drehöfen werden vor allem in Zementwerken für die Gewinnung von Zementklinker aus Rohmehl eingesetzt. Dabei wird das Rohmehl zunächst in einen Vorwärmer gegeben, gelangt von dort über einen Calzinator in den Drehofen und schließlich in einen Kühler, aus dem der Klinker zur weiteren Verarbeitung austritt. Für die Beheizung des Vorwärmers und auch des Calzinators werden die heißen Abgase des Drehofens und des Kühlers benutzt. Auch für die Beheizung des Drehofens selbst wird das heiße Abgas des Kühlers mit verwendet. Durch diese gegenseitige Verknüpfung der genannten Anlagenkomponenten entsteht eine Vielzahl gegenseitiger Abhängigkeiten und damit ein komplexer Prozeßablauf, der relativ schwer zu überwachen und zu steuern ist. Erschwerend kommt hinzu, daß der Prozeß, insbesondere wegen Unregelmäßigkeiten im Drehofen nicht kontinuierlich verläuft. Im Drehofen bilden sich nämlich ringförmige Ansätze, die, wenn sie eine bestimmte Dicke erreicht haben, partiell abbrechen. Dadurch entsteht in der Sinterzone kurzfristig ein Temperatureinbruch, der den Prozeßverlauf erheblich stört. Je rascher dabei Gegenmaßnahmen ergriffen werden können, desto geringer ist die Störungsauswirkung.

Nach heutigem Stand der Technik wird, um solche Abbrüche zu erkennen, das Antriebsdrehmoment des Drehofens durch Messung des Ankerstromes des Gleichstromantriebsmotors kontinuierlich ermittelt und in einem Meßwertschreiber aufgezeichnet. Dieser Schreibstreifen wird von der Bedienungsperson visuell beobachtet und interpretiert. Ein größerer ungleichmäßiger Ansatz oder Abbruch der ringförmigen Anlagerung läßt sich auf diese Weise feststellen, so daß Gegenmaßnahmen ergriffen werden können. Da die verwendeten Meßwertschreiber relativ ungenau arbeiten, werden kleinere Abbrüche von den Störgrößen derart überlagert, daß sie nur sehr schwer oder überhaupt nicht erkennbar sind. Hinzu kommt, daß es der Bedienungsperson nicht zumutbar ist, den Schreibstreifen kontinuierlich ohne Unterbrechung zu beobachten, so daß er praktisch erst interpretiert wird, wenn durch Grenzwertmeldungen anderer Meßwerte (z.B. der Sinterzonentemperatur) eine größere Störung erkannt wird. Dies wird jedoch erst etwa 10-15 Minuten nach der Störungsursache (Abbruch des Ansatzes) deutlich.

Ziel der vorliegenden Erfindung ist es, die Drehmomentmessung insgesamt zu verbessern und zu präzisieren, um eine klare Trennung des Drehmoment-Mittelwertes von überlagerten Störgrößen zu erreichen und dabei auch kleine Änderungen des Mittelwertes erkennen und für die Ofensteuerung, die entweder von Hand oder auch automatisch erfolgen kann, verwenden zu können. Außerdem soll es möglich sein, die erkannten Störgrößen rasch auszuwerten, und nicht nur einen Abbruch als solchen festzustellen, sondern möglichst auch die Abbruchmenge quantitativ zu erfassen.

Demzufolge liegt der Erfindung die Aufgabe zugrunde, eine Meßanordnung zu schaffen, die auf der Basis digitaler Meßwertverarbeitung bei Ringabbrüchen innerhalb möglichst kurzer Zeit reagiert und im Falle des Handbetriebes ein Meldesignal abgibt und bei automatischer Ofenregelung diese bereits vor dem durch den Ringabbruch verursachten Einbruch der Sinterzonentemperatur auf die sich ändernden Prozeßdaten vorbereiten zu können.

Diese Aufgabe wird durch die im Patentanspruch 1 angegebene Erfindung gelöst.

Vorteilhafte Weiterbildungen und Ausgestaltungen der Meßanordnung sind in den Unteransprüchen gekennzeichnet. Die Erfindung wird anhand eines Ausführungsbeispieles im folgenden näher erläutert. Darin zeigen:

Fig. 1 eine Prinzipdarstellung eines Drehofens mit Antrieb und diesem zugeordneter Meßanordnung;

Fig. 2 einen Querschnitt durch den Drehofen in der Sinterzone mit schematischer Darstellung der Meßpunkte,

Fig. 3 den Drehmomentverlauf einer Ofenumdrehung bei unrunder Ansatzbildung;

Fig. 4 den Drehmomentverlauf gemäß Fig. 3 mit durch vom Materialstrom verursachten Pendelungen;

Fig. 5 einen Querschnitt des Drehofens mit schematisierten Ansatzmassen sowie Drehmomentverläufen mit unterschiedlichen simulierten Abbrüchen;

Fig. 6 und 7 durch Meßwertverarbeitung entwickelte Gradientenverläufe der Abweichungen von den Mittelwerten und den Maximum-Minimum-Differenzen je Umdrehung.

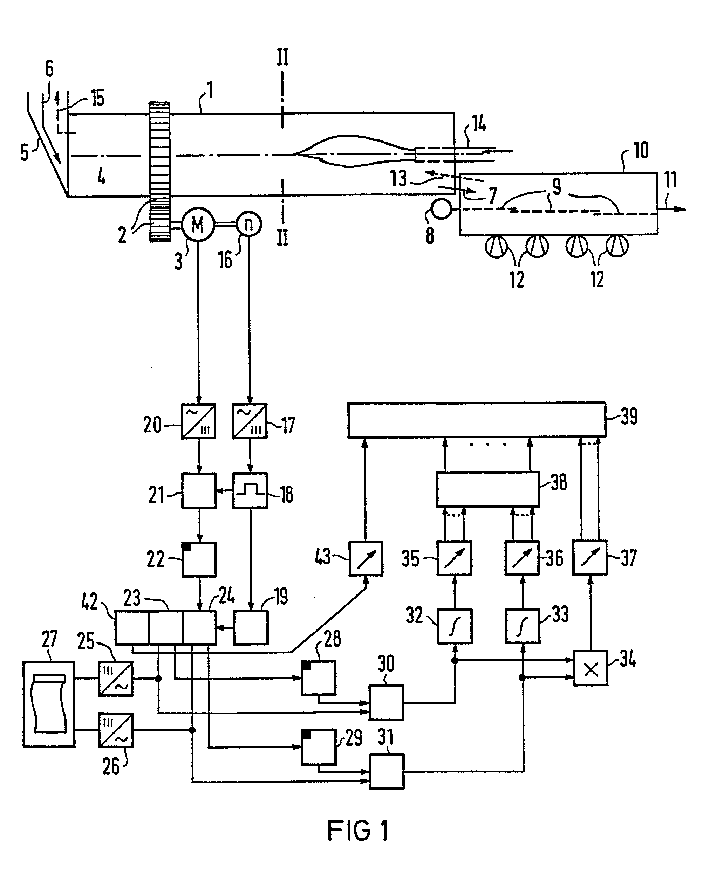

In Fig. 1 ist ein Zementdrehofen in stark schematisierter Form dargestellt. Der Drehofen 1 wird über ein Zahnradgetriebe 2 von einem Elektromotor 3 in eine Drehbewegung um die Zentralachse 4 versetzt. Die obere Öffnung des Ofens ist mit einem Trichter 5 versehen, in den das aus einem nicht dargestellten Wärmetauscher/Calzinator austretende Rohmehl in Richtung des Pfeiles 6 in den Ofen eingeführt wird. Durch die Neigung des Ofens und die Drehbewegung fließt das Material langsam von der Einlaufseite in Richtung auf die Auslaufseite des Ofens, tritt dort in Richtung des Pfeiles 7 aus und gelangt auf den von einem Motor 8 angetriebenen Schubrost 9 eines Klinkerkühlers 10, aus dem es in Richtung des Pfeiles 11 als Klinker austritt und einer Weiterverarbeitung zugeführt wird. Die Kühlung erfolgt in einem durch die Gebläse 12 geführten Kühlluftstrom, der nach seiner Erwärmung in Richtung des Pfeiles 13 aus dem Klinkerkühler 11 austritt und als vorgeheizte Verbrennungsluft für den Brennstoff des Brenners 14 des Drehofens 1 dient. Die aus dem Drehofen trichterseitig in Richtung des gestrichelten Pfeiles 15 austretende Heißluft dient widerum als vorgeheizte Verbrennungsluft des Brennstoffes des Brenners des nicht dargestellten Calzinators. Durch den von der Materialzusammensetzung, von der Ofendrehzahl, von der Brennertemperatur und von dem Durchsatz durch den Klinkerkühler abhängigen Prozeß entsteht eine gegenseitige Abhängigkeit der einzelnen Prozeßelemente, die der Bedienungsperson ein hohes Maß an Aufmerksamkeit abverlangt. Darüberhinaus bilden sich in verschiedenen Zonen des Drehofens, an der inneren Ofenwandung ringförmige ungleichmäßige Ansätze, die zu einem sinusförmigen Verlauf des Drehmomentes über eine Ofenumdrehung führen. Hinzu kommen vom wechselweise hochgehobenen Materialstrom verursachte kürzerwellige Überlagerungen dieses Sinusverlaufes des Drehmomentes. Nun brechen zu unregelmäßigen Zeitpunkten Teile dieses ringförmigen Ansatzes ab und verursachen plötzliche Drehmomentsprünge verbunden mit einem darauffolgenden Einbruch der Sinterzonentemperatur. Diese Ereignisse sind derzeit von der Bedienungsperson nicht rechtzeitig erkennbar, daher kommt es zu einer erheblichen Störungen des Prozesses mit der Folge von Qualitätsminderungen des Klinkers.

Es geht also darum, durch solche Abbrüche verursachte Störungen möglichst frühzeitig zu erkennen und auch quantitativ zu erfassen, um rechtzeitig angemessene Gegenmaßnahmen treffen zu können. Bisher war das deshalb schwierig, weil lediglich der Drehmomentverlauf festgestellt und mit Hilfe eines Meßwertschreibers auf Papier aufgezeichnet worden ist. Es ist für eine Bedienungsperson nicht einfach, einen solchen Schreibstreifen auszuwerten, weil sich zum einen manche Abbrüche kaum von überlagerten anderen Störgrößen abheben oder zu Zeitpunkten erfolgen, die nur eine kurzdauernde oder gar keine Amplitudenänderung, sondern eine nicht erkennbare Phasenverschiebung des Drehmomentverlaufes zur Folge haben.

Die im folgenden beschriebene Meßanordnung verarbeitet die anfallenden Drehmoment-Meßwert derart, daß auftretende Störungen auch dann zu erkennen sind, wenn sie auf dem Schreibstreifen kaum in Erscheinung treten und von der Bedienungsperson leicht übersehen werden können.

Dazu wird der Antriebsmotor 3 mit einem Drehzahlmesser 16 versehen, dessen Meßwert von einem Analog-Digital-Wandler 17 digitalisiert und einem Winkelschrittzähler 18 sowie einem Drehzahlzähler 19 zugeführt wird. Der in bekannter Weise aus dem Ankerstrom des Antriebsmotors 3 ermittelte Drehmomentwert wird einem weiteren Analog-Digital-Wandler 20 zugeführt, dessen digitalisiertes Signal an eine Meßwert-Erfassungseinheit 21 gelangt, die mit dem Winkelschrittzähler 18 und mit einem Speicher 22 verbunden ist. Sowohl dieser Speicher 22 als auch der Drehzahlzähler 19 sind mit einer Baugruppe 23, 24, 42 verbunden, welche auf noch zu beschreibende Weise aus den zugeführten Digitalsignalen pro Umdrehung des Drehofens 1 in der Stufe 23 einen Mittelwert, in der Stufe 24 die Maximum-Minimum-Differenz jeder Umdrehung und in der Stufe 42 die Phasenverschiebung zwischen Maximum und Minimum bildet. Im Winkelschrittzähler 18 wird jede Ofenumdrehung in eine gleiche Anzahl von Meßpunkten, beispielsweise sechzehn unterteilt. Der Winkelschrittzähler 18 schaltet zu diesem Zweck die Meßwerterfassungsstufe 21 an jedem dieser Meßpunkte kurzzeitig ein, so daß diese den betreffenden Drehmomentwert erfaßt und in den Speicher 22 eingibt. Dieser speichert die gemessenen Einzelwerte über eine Umdrehung und führt diese nach Erfassung des letzten Meßwertes pro Umdrehung der Baugruppe 23, 24, 42 zu, welche nach jeder Umdrehung, zu der sie vom Drehzahlzähler 19 einen entsprechenden Impuls erhält, in der Stufe 23 den Mittelwert und in der Stufe 24 den Maximum-Minimum-Differenzwert pro Umdrehung bildet. Diese Werte werden von den Analog-Digital-Wandlern 25, 26 in analoge Meßwerte verwandelt und dem Meßwertschreiber 27 zugeführt, der sie auf Papierstreifen aufzeichnet. Gleichzeitig werden diese Werte in digitaler Form je einem Speicher 28, 29 zugeführt. Sie werden dort über je vier Umdrehungen gespeichert und je einer Stufe 30, 31 für die Bildung der absoluten Gradienten eingegeben. Die von diesen Stufen erzeugten Gradientenwerte werden sowohl je einem Integrator 32, 33 als auch einem Multiplikator 34 zugeleitet. Die Multiplikation der beiden koinzidierend auftretenden Gradientenwerte hat zum Ziel, auch kleinere Materialabbrüche durch die bei der Multiplikation entstehende Versteilerung des resultierenden Gradienten aus dem Störpegel herauszuheben und erkennbar zu machen. Die Integratoren 32, 33 und der Multiplikator 34 sind mit je einer einstellbaren Grenzwertstufe 35, 36, 37 verbunden. Die von den Grenzwertstufen 35 und 36 gebildeten Werte werden von einer Größtwertelektronik 38 so miteinander verknüpft, daß die jeweils größere Grenzwertüberschreitung am Ausgang dieser Stufe wirksam wird.

In der Stufe 42 wird die Phasenverschiebung zwischen Maximum und Minimum ermittelt und an die Grenzwertstufe 43 übergeben, diese prüft, ob die Phasenverschiebung 180° (bei 16 Meßpunkten gleich 8) beträgt. Weicht sie davon ab, so wird ein Signal an die Auswertungsstufe 39 abgegeben, die es zusammen mit den anderen Signalen zur Signalisierung eines Ansatzabbruches auswertet. Ebenso wird das Auftreten mehrerer Maxima und Minima überprüft und an die Auswertstufe 39 abgegeben.

Durch diese Grenzwertbildung der absolutierten und multiplizierten oder integrierten Gradienten ist ein rasche Signalisierung jedes Abbruches von Ansatzbildung möglich. Durch von den Grenzwertstufen 35, 36, 37 gebildete gestaffelte Grenzen kann auch auf die Größe des Abbruches geschlossen werden. Diese Werte können entweder in einer Auswertungsstufe 39 bildlich dargestellt und der Bedienungsperson angezeigt werden, wobei optische oder akustische Warnsignale bestimmte Grenzüberschreitungen anzeigen können, oder als Führungsgrößen von Regelkreisen benutzt werden, welche auf die verschiedenen Parameter der Anlage wirken.

Die Drehmomentmessung ist allerdings nur gültig, wenn der Drehofen 1 keine Beschleunigung oder Verzögerung, etwa durch eine nicht dargestellte Drehzahlregeleinrichtung, erfährt. Solche Beschleunigungs oder Verzögerungsvorgänge beschränken sich bei der üblichen Ofendrehzahlregelung immer nur auf einen kleinen Abschnitt einer Ofenumdrehung. Damit nicht die gesamte Ofenumdrehung für die Messung und damit auch für die Ringbruchüberwachung ausfällt, sind der Winkelschrittzähler 18 und der Drehzahlzähler 19 so ausgebildet, daß sie Drehzahländerungen von einer Winkelposition zur nächsten ermitteln und die während deren Dauer angefallenen Meßwerte löschen, wobei die gespeicherten Meßwerte der vorhergehenden Umdrehung wirksam werden. Der dadurch entstehende Fehler ist für den gesamten Meßablauf ohne Bedeutung.

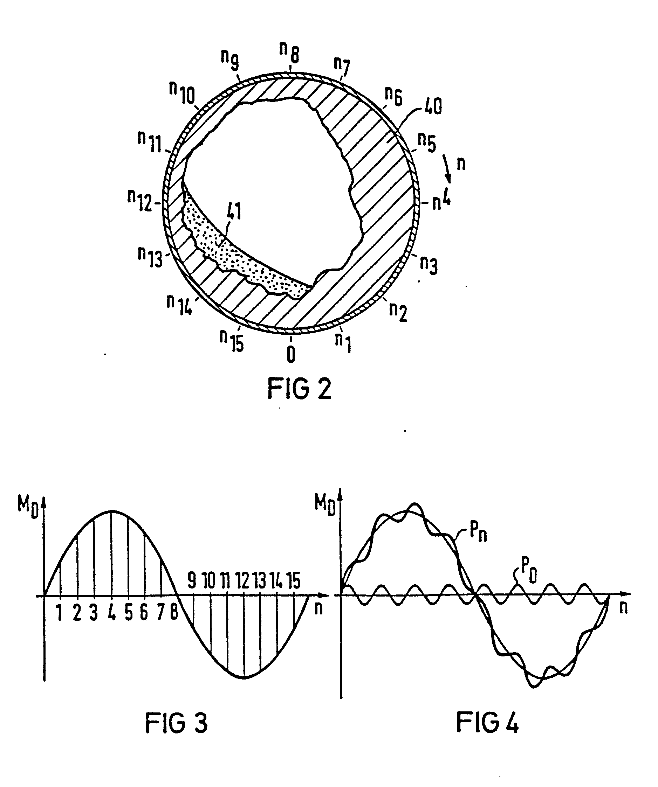

In Fig. 2 ist ein Querschnitt durch die Zone einer Ansatzbildung des Drehofens 1 dargestellt. Dabei ist gleichzeitig die Unterteilung des Umfanges in 16 Meßpunkte n0 bis n15 zu erkennen. Der ringförmige Ansatz 40 ist schraffiert dargestellt. Das auf diesen Ansatz aufliegende Material ist durch die punktierte Zone 41 angedeutet.

In Fig. 3 ist der Drehmomentverlauf in Abhängigkeit von den einzelnen Meßpunkten einer Umdrehung in idealisierter Form dargetellt, während in Fig. 4 die gleiche Abhängigkeit jedoch mit dem vom oszillierenden Materialstrom verursachten Pendelungen $P_0$ ohne Ansatzring und $P_n$ mit überlagerter Drehmomentkurve aus unrunder Ansatzbildung gezeigt ist.

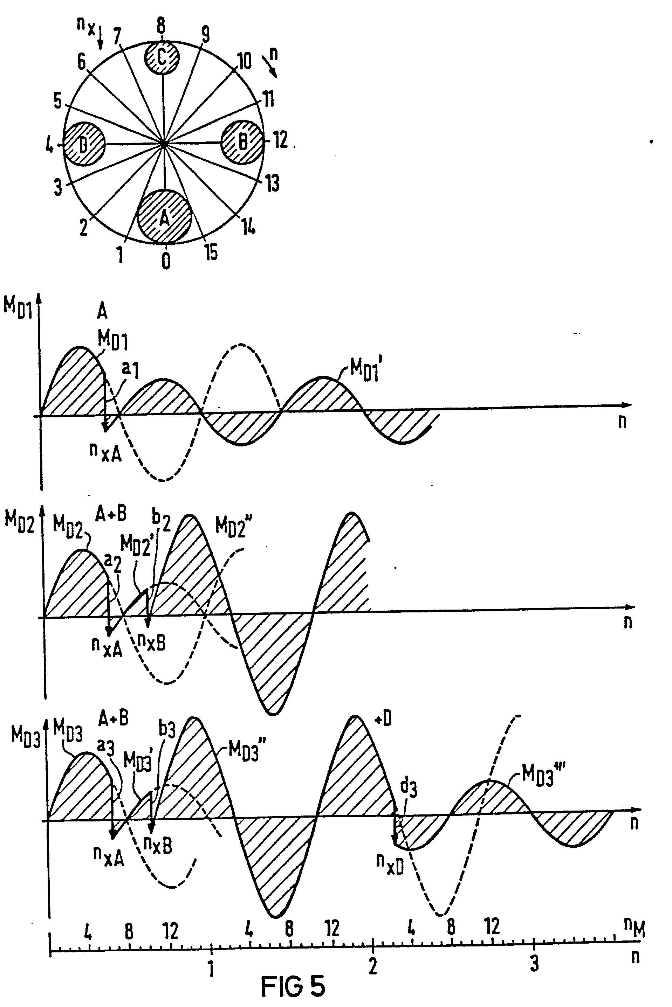

Um den Drehmomentverlauf bei verschiedenen Ringbrüchen quantitativ schematisiert darzustellen, ist in Fig. 5 angenommen, daß über den Umfang des Drehofens vier kugelförig dargestellte Gewichte A, B, C und D gleichmäßig verteilt sind, die sich zu verschiedenen Zeitpunkten von der Ofenwand lösen und in den Materialstrom fallen. Die Gewichtsverhältnisse sind so gewählt, daß sich die Gewichte A zu B zu C zu D wie 3 : 2 : 1 : 2 verhalten. Im oberen Kurvenverlauf $M_D$ = f (n) ist angenommen, daß das Gewicht A nach Erreichen des Umdrehungswertes $n_{xA}$ zwischen dem sechsten und siebten Meßpunkt abfällt, so daß nunmehr die Gewichte D und C auf der rechten Trommelseite dem Gewicht B auf der linken Trommelseite gegenüberstehen und somit das Drehmoment $M_{D1}$ entsprechend dem Pfeil a1 auf einen negativen Wert abfällt. Damit entsteht eine neue Gewichtsverteilung über den Ofenquerschnitt, welche die bis zu diesem Zeitpunkt geltende Drehmomentkurve $M_{D1}$ in die Kurve $M_{D1}$, überleitet. Im Kurvenzug des Beispieles 2 fällt wiederum das Gewicht A bei Erreichen des Drehzahlpunktes $n_{xA}$ ab und führt die bisher geltende Drehmomentkurve $M_{D2}$ entlang des Pfeiles $a_2$ in die neue Drehmomentkurve $M_{D2}$, über. Bei Erreichen des Drehzahlpunktes $n_{xB}$ fällt das Gewicht B ab und leitet die Drehmomentkurve $M_{D2}$, entlang dem Pfeil $b_2$ in die neue Drehmomentkurve $M_{D2''}$ über. Im Beispiel 3 des unteren Kurvenzuges fallen wie bereits beschrieben die Gewichte A und B zu den genannten Zeitpunkten ab. Zusätzlich fällt nach dem Ende der zweiten Umdrehung im Drehzahlpunkt $n_{xD}$ zusätzlich das Gewicht D ab und führt die Kurve $M_{D3''}$ entlang dem Pfeil $d_3$ in die Kurve $M_{D3''}$, über.

Anhand dieser drei Beispielfälle soll verdeutlicht werden, daß aus dem Kurvenbild des Drehmomentes $M_D$ in Abhängigkeit von der Ofenumdrehung n Aussagen nicht nur über Ort und Zeitpunkt des Ansatzabfalles, sondern auch über dessen ungefähre Quantität möglich sind.

Löst man nun die in Fig. 5 dargestellten Kurvenzüge in der bereits beschriebenen Weise in Einzelmessungen auf, welche über die Ofendrehzahl so synchronisiert werden, daß je Ofenumdrehung immer die gleiche Anzahl von Einzelmeßpunkten M im gleichen Drehwinkelabstand (z.B. 22,5° bei 16 Messungen je Umdrehung gemäß dem vorliegenden Ausführungsbeispiel) vorgenommen wird, besteht die Möglichkeit, aus diesen Einzelmessungen aussagekräftige Werte zu gewinnen, welche sowohl die Tatsache eines Abbruches wie auch dessen ungefähre quantitative Größe signalisieren.

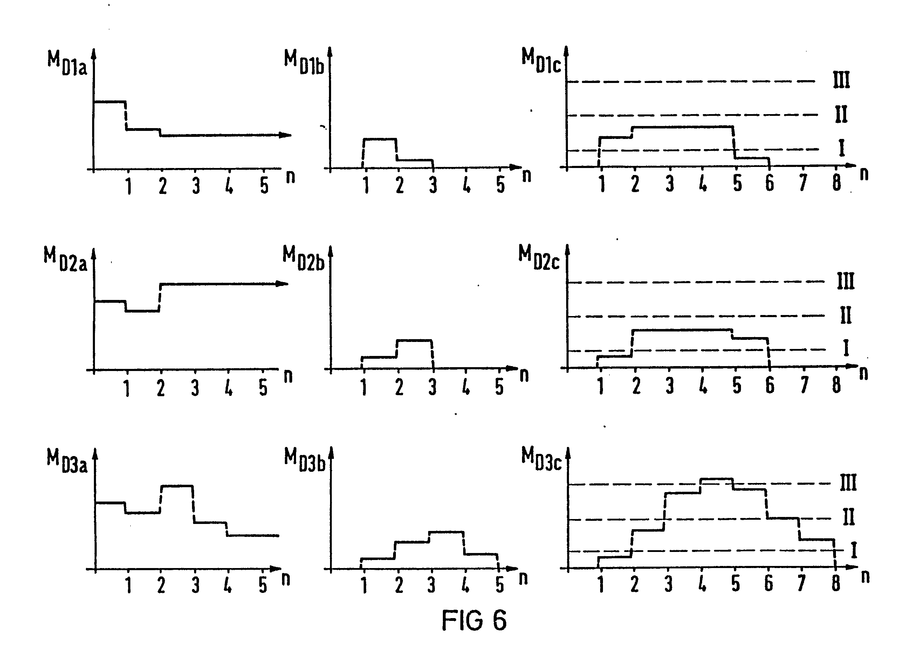

In Fig. 6 sind nun in der oberen Reihe drei Möglichkeiten für die Auswertung der Maximum-Minimum-Differenz der Einzelmessungen je Ofenumdrehung, bezogen auf das erste Beispiel der Fig. 5, dargestellt. In der oberen linken Kurve $M_{D1a}$ = f (n) ist die Maximum-Minimum-Differenz je Umdrehung in ihrer absoluten Größe aufgezeichnet. Dort sind die Beträge der Maximum-Minimum-Differenz aufgetragen, wie sie zu der jeweils vorhergehenden Umdrehung bestehen. Das rechts daneben aufgezeichnete Diagramm $M_{D1b}$ enthält die Absolutwerte der Gradienten des vorher erläuterten Diagrammes. In der Darstellung rechts daneben sind die Gradientenwerte des vorhergehenden Diagrammes über je vier Umdrehungen integriert und zwar in der Weise, daß der jeweils neu hinzukommende Wert mit Hilfe eines Schieberegisters zugunsten des jeweils ältesten Wertes in den Speicher 28, 29 (Fig. 1) übernommen wird. Die darunterliegende Diagrammreihe $M_{D2}$ = f (n) zeigt die in der vorbeschriebenen Weise aufbereiteten Maximum-Minimum-Differenzwerte je Umdrehung des Beispieles 2 aus Fig. 5. Die unterste Diagrammreihe zeigt die entsprechenden Werte des Beispieles 3 aus Fig. 5. Man kann nun die jeweils rechten Diagramme mit den über mehrere Umdrehungen integrierten Gradienten in drei Amplitudengrößen des Drehmomentes (gestrichelte Linien I, II, III) in unterschiedlich hohe Werte unterteilen.

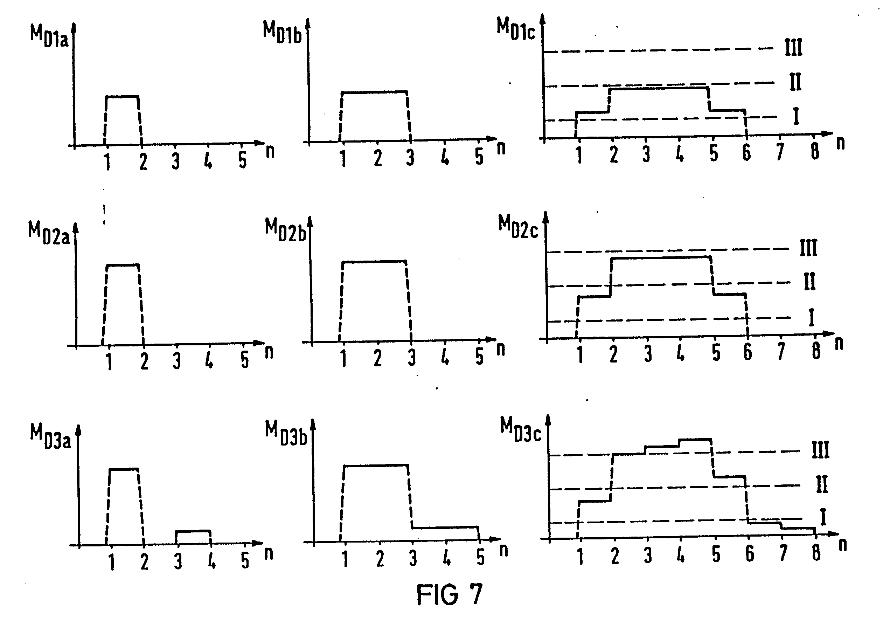

In dem in Fig. 7 dargestellten Diagrammen sind die Abweichungen der Drehmomente je Umdrehungen von den Mittelwerten sowie deren absolute Gradienten für jede Umdrehung und die über vier Umdrehungen integrierten und in verschiedene Amplitudenhöhen unterteilten Werte dargestellt (in Analogie zu Fig. 6). Dabei entspricht die obere Reihe wiederum dem Beispiel 1 der Fig. 5, die mittlere Reihe dem Beispiel 2 und die untere Reihe dem Beispiel 3. Die linken Diagramme jeder Reihe enthalten die Abweichungen von den Mittelwerten der jeweils vorangegangenen Umdrehung. In den mittleren Diagrammen sind die absoluten Gradienten der Abweichung vom Mittelwert der jeweils vorangegangen Umdrehung dargestellt während in den rechten Diagrammen diese Gradienten wiederum über vier Umdrehungen in der Weise gespeichert und anschließend integriert sind, daß nach Art eines Schieberegisters ein neuer Wert den vorhandenen ältesten Wert ersetzt. Durch Auswertung der Überschreitung der Amplitudenhöhe entsprechend der gestrichelten Linien I, II, III in Fig. 6 und 7 in der Art, daß die jeweils höhere der erreichten Amplitudenhöhe als aussagekräftiger gewertet wird läßt sich eine quantifizierte Aussage über den Grad von Ansatzabbrüchen gewinnen. Die Sicherheit dieser Aussage gegenüber Störeinflüssen kann dadurch erhöht werden, daß auch noch die Phasenlage von Maximum und Minimumn bzw. Auftreten von mehreren Maxima und Minima je Ofendrehung geprüft wird (Ohne Ansatzbruch treten je Umdrehung nur ein Maximum und Minimum mit einer Phasenverschiebung von 180° auf.)

Anhand dieser Aussage ist es der Bedienungsperson oder einem automatischen Regelkreis möglich, sofort die zur Vermeidung eines Einbruches der Sinterzonentemperatur notwendigen Gegenmaßnahmen zu ergreifen.

## Patentansprüche

1. Meßanordnung zur Ermittlung und Auswertung des Drehmomentes der Antriebsmaschine eines Drehofens, dadurch gekennzeichnet , daß die Meßanordnung aus je einer Einheit für die Meßwerterfassung des Drehmomentes (21) in Abhängigkeit von der Ofendrehung, die Meßwertverarbeitung (23, 24) und die Meßwertausgabe (27) sowie einer Steuereinheit (18, 19) gebildet ist, die die an der Meßwerterfassungseinheit (21) entstehenden Meßwerte in Abhängigkeit vom Drehwinkel des Drehofens (1) in festgelegten Winkelpositionen ($n_0$-$n_{15}$) der Meßwertverarbeitungseinheit (23, 24) zuführt, welche je Umdrehung des Drehofens einen Mittelwert und einen Differenzwert aus maximalem Einzelwert minus minimalem Einzelwert bildet und in Speicherstufen (28, 29) abspeichert, und Gradientenstufen (30, 31) vorhanden sind, die den jeweiligen Gradienten aus den entsprechenden gespeicherten Werten (Mittelwert und Differenzwert) der vorhergehenden Umdrehung und den aktuell berechneten Werten bilden, und die von den Gradientenstufen (30, 31) gebildeten Werte je einer Integrationsstufe (32, 33) zugeführt sind, deren Ausgangswerte über je eine einstellbare Grenzwertstufe (35, 36) an eine Schwellwertstufe (38) gelangen, die beim Überschreiten vorgegebener Schwellwerte der Meßwert-Ausgabeeinheit (39) Signalimpulse zuführt.

2. Meßanordnung nach Anspruch 1, dadurch gekennzeichnet , daß die von den Gradientenstufen (30, 31) gebildeten Werte zusätzlich einer Multiplikationsstufe (34) zugeführt sind, die mit einer Grenzwertstufe (37) verbunden ist, welche die ihr zugeführten Signale innerhalb der eingetellten Grenzwerte der Meßwert-Ausgabeeinheit (39) zuführt.

3. Meßanordnung nach einem der vorhergehenden Ansprüche, dadurch gekennzeichnet , daß die Steuereinheit (18, 19) Drehzahländerungen von einer Winkelposition zur nächsten ermittelt, die zur Ausblendung des zugehörigen Drehmomentwertes in der Meßwerterfassungeinheit (21) und im Speicher (22) dienen, um Drehmomentwerte, die von Beschleunigungs- oder Verzögerungsmomenten des Drehofens überlagert sind, von der weiteren Auswertung auszuschließen.

4. Meßanordnung nach einem der vorhergehenden Ansprüche, dadurch gekennzeichnet, daß eine Stufe (42) die Phasenverschiebung zwischen Maximum und Minimum des Drehmomentes einer Umdrehung ermittelt und über eine Grenzwertstufe (43) im Falle einer Abweichung von 180° ein Signal an die Ausgabeeinheit (39) abgibt.

5. Meßanordnung nach Anspruch 4, dadurch gekennzeichnet, daß die Stufe (42) das mehrmalige Auftreten von Maximum und Minimum des Drehmomentes innerhalb einer Umdrehung ermittelt und über die Grenzwertstufe (43) ein Signal an die Ausgabeeinheit (39) abgibt.

## Claims

1. A measuring arrangement for the determination and analysis of the torque of the drive motor of a rotating furnace, characterised in that the measuring arrangement consists of a unit (21) which serves to detect the measured values of the torque in dependence upon the rotation of the furnace, a unit (23, 24) which serves to process the measured values, a measured values output unit (27) and a control unit (18, 19) by which the measured values produced by the measured value detecting unit (21) in dependence upon the angle of rotation of the rotating furnace (1) in predetermined angular positions ($n_0$ - $n_{15}$) are supplied to the measured value processing unit (23, 24), which forms and stores in storage stages (28, 29) a mean value and a difference value composed of a maximum individual value minus a minimum individual value in respect of each rotation of the rotating furnace, and that gradient stages (30, 31) are provided which form the respective gradient of the corresponding, stored values (mean value and difference value) of the preceding rotation and the currently calculated values, and that the values formed by the gradient stages (30, 31) are each supplied to an integration stage (32, 33) whose output values are each fed, via an adjustable limit value stage (35, 36), to a threshold value stage (38) which supplies signal pulses to the measured value output unit (39) when predetermined threshold values are exceeded.

2. A measuring arrangement as claimed in Claim 1, <u>characterised in that</u> the values formed by the gradient stages (30, 31) are additionally fed to a multiplication stage (34) connected to a limit value stage (37) which feeds the measured value output unit (39) with the supplied signals, within the set limit values.

3. A measuring arrangement as claimed in one of the preceding Claims, <u>characterised in that</u> the control unit (18, 19) determines changes in rotation speed from one angular position to the next, to gate out the associated torque value in the measured value detecting unit (21) and in the store (22) in order to eliminate from the continued analysis torque values which are superimposed by acceleration or delay moments of the rotating furnace.

4. A measuring arrangement as claimed in one of the preceding Claims, <u>characterised in that</u> a stage (42) determines the phase shift between the maximum and minimum of the torque of a rotation and, in the case of a deviation of 180°, emits a signal to the output unit (39) via a limit value stage (43).

5. A measuring arrangement as claimed in Claim 4, <u>characterised in that</u> the stage (42) determines the multiple occurrence of the torque maximum and minimum within a rotation and emits a signal to the output unit (39) via the limit value stage (43).

**Revendications**

1. Dispositif de mesure pour déterminer et évaluer le couple de rotation de la machine d'entraînement d'un four rotatif, caractérisé par le fait que le dispositif de mesure est constitué par une unité (21) pour la détection de la valeur de mesure du couple de rotation en fonction de la rotation du four, une unité (23, 24) pour le traitement de la valeur de mesure et une unité (27) pour la délivrance de la valeur de mesure ainsi que par une unité de commande (18, 19), qui envoie les valeurs de mesure qui apparaissent dans l'unité (21) de détection de la valeur de mesure, en fonction de l'angle de rotation du four rotatif (1) pour des positions angulaires fixées ($n_0$-$n_{15}$) de l'unité (23, 24) de traitement des valeurs de mesure, qui forment, lors de chaque rotation du four rotatif, une valeur moyenne et une valeur de différence, à partir de la valeur individuelle maximale moins la valeur individuelle minimale et les mémorise dans des étages de mémoire (28, 29), et qu'il est prévu des étages (30, 31) de formation de gradients, qui forment les gradients respectifs à partir des valeurs correspondantes mémorisées (valeur moyenne et valeur de différence) de la rotation précédente et à partir des valeur calculées réellement, et que les valeurs formées par les étages (30, 31) de formation de gradients sont envoyées à des étages respectifs de formation (32, 33), dont les valeurs de sortie parviennent par l'intermédiaire d'étages respectifs réglables (35, 36) de formation de valeurs limites, à un étage à valeur limite (38), qui envoie des impulsions de signal à l'unité (39) de sortie de la valeur de mesure, lors du dépassement de valeurs de seuil prédéterminées.

2. Dispositif de mesure suivant la revendication 1, caractérisé par le fait que les valeurs formées par les étages (30, 31) de formation de gradients sont envoyées en outre à un étage multiplicateur (34), qui est relié à un étage (37) de formation de valeurs limites, qui envoie les signaux, qui lui sont envoyés, entre les valeurs limites réglées, à l'unité (39) de sortie de la valeur de mesure.

3. Dispositif de mesure suivant l'une des revendications précédentes, caractérisé par le fait que l'unité de commande (18, 19) détermine des varations de la vitesse de rotation se produisant depuis une valeur limite jusqu'à la suivante et qui servent à supprimer la valeur associée du couple de rotation dans l'unité (21) de détection de la valeur de mesure et dans la mémoire (22), afin d'exclure, de l'évaluation ultérieure, des valeurs de couples de rotation auxquelles sont superposés des moments d'accélération ou de décélération du four rotatif.

4. Dispositif de mesure suivant l'une des revendications précédentes, caractérisé par le fait qu'un étage (42) détermine le déphasage entre le maximum et le minimum du couple de rotation sur une rotation et délivre par l'intermédiaire d'un étage (43) de délivrance de valeurs limites un signal à l'unité de sortie (39), dans le cas d'un écart de 180°.

5. Dispositif de mesure suivant la revendication 4, caractérisé par le fait que l'étage (42) détermine l'apparition multiple du maximum et du minimum du couple de rotation au cours d'une rotation et délivre, par l'intermédiaire de l'étage (43) de délivrance de valeurs limites, un signal à l'unité de sortie (39).

FIG 1

FIG 2

FIG 3

FIG 4

FIG 5

FIG 6

FIG 7